# EUROPEAN PATENT APPLICATION

(11) **EP 4 173 819 A1**
(43) Date of publication of application: **03.05.2023**
(21) Application number: 22204086.7
(22) Date of filing: 27.10.2022
(51) Int. Cl.: B32B 15/08, B32B 27/08, B32B 15/085, B32B 15/088, B32B 15/09, B32B 15/20, B32B 27/34, B32B 27/36

(54) **BATTERY PACKAGING MATERIAL**

(30) Priority: 27.10.2021 JP 2021175255; 20.09.2022 JP 2022148950
(71) Applicant: Showa Denko Packaging Co., Ltd., Isehara-shi, Kanagawa 259-1146 (JP)
(72) Inventor: KODA, Naoya, Kanagawa (JP)
(74) Representative: Hoffmann Eitle

(57) **Abstract**

A battery packaging material is formed of a laminate. The laminate is composed of an outer layer including a substrate layer, a barrier layer as an intermediate layer, and a heat fusible resin layer as an innermost layer. The total thickness of the laminate is 60 pm to 220 µm. The barrier layer is formed of a metal foil. The product of a stress value and a thickness of the heat fusible resin layer at a time of 10% stretching is 1,200 Pa·m or more.

## Description

### CROSS-REFERENCE TO RELATED APPLICATIONS

This application claims priority to Japanese Patent Application No. 2021-175255 filed on October 27, 2021 and Japanese Patent Application No. 2022-148950 filed on September 20, 2022, the disclosures of which are incorporated herein by reference in its entirety.

### BACKGROUND OF THE INVENTION

### Field of the Invention

The present disclosure relates a case for a secondary battery, such as, e.g., a secondary battery for automobiles, a stationary secondary battery, a secondary battery for notebook computers, a secondary battery for cellular phones, and a secondary battery for cameras. In particular, the present disclosure relates to a battery packaging material preferably used as a case for a small portable lithium-ion secondary battery.

### Description of the Related Art

A power storage device typified by a Li-ion battery can be processed into various shapes by using a laminate-type packaging material in which a resin layer is bonded to both surfaces of a metal foil, such as, e.g., an aluminum foil, and therefore can be further thinned and reduced in weight.

Furthermore, a laminate-type battery packaging material is press-formed into a cup shape in order to secure a space for accommodating a battery main body, thereby producing a battery case. At the time of the molding, stress tends to escape to the end portion of the battery packaging material corresponding to the wrinkle holding portion, and therefore, the flange portion corresponding to the wrinkle holding portion is likely to curl. Such curling of the flange portion causes positioning failure and/or gripping failure in an automated transfer using a robotic arm or a suction cup.

Various measures have been proposed for suppressing curling generated at a flange portion by molding a battery packaging material (see Patent Documents 1 to 3).

Patent Document 1 proposes to define a thickness of each layer and a total thickness. Patent Document 2 proposes to define a thickness ratio between a substrate layer and a sealant layer and define proof stress in a TD direction and an MD direction of an aluminum foil. Patent Document 3 proposes to define a stress value of an entire battery packaging material and a substrate layer in a TD direction and an MD direction.

### Prior Art Document

### Patent Document

Patent Document 1: Japanese Unexamined Patent Application Publication No. 2020-129543
Patent Document 2: Japanese Patent No. 6879321
Patent Document 3: Japanese Patent No. 6627908

### SUMMARY OF THE INVENTION

### Problems to be Solved by the Invention

Among layers constituting a battery packaging material, a barrier layer formed of a metal foil is large in density than that of a resin layer, and therefore, it is considered that curling can be suppressed due to its own weight by thickening the thickness of the barrier layer. On the other hand, however, increasing the thickness of the barrier layer results in an increased cost and an increased weight of the packaging material. This means that the weight increase of the packaging material causes an increase in the battery weight although the battery capacitance does not change. If it is tried to offset the weight increase of the barrier layer by thinning the resin layer, there arises a problem, such as, e.g., degradation of sealing property and insulation property of the battery case, due to the resin layer.

### Means for Solving the Problems

In view of the above-described technical background, the present disclosure provides a battery packaging material capable of suppressing curling at the time of molding without increasing the weight and decreasing the resin layer performance.

That is, the battery packaging material according to the present disclosure has the configurations described in the following items [1] to [5].
[1] A battery packaging material comprising:
   a laminate,
   wherein the laminate includes:
      an outer layer including a substrate layer;
      a barrier layer as an intermediate layer; and
      a heat fusible resin layer as an innermost layer,
      wherein a total thickness of the laminate is 60 µm to 220 µm,
      wherein the barrier layer is formed of a metal foil, and
      wherein the product of a stress value and a thickness of the heat fusible resin layer at a time of 10% stretching is 1,200 Pa·m or more.
[2] The battery packaging material as recited in the above-described Item [1],
   wherein the stress value of the heat fusible resin layer at the time of 10% stretching is 14 MPa to 35 MPa.
[3] The battery packaging material as recited in the above-described Item [1] or [2],
   wherein a thickness of the heat fusible resin layer is 20 µm to 120 µm.
[4] The battery packaging material as recited in any one of the above-described Items [1] to [3],
   wherein breaking strength of the outer layer is 20 MPa to 160 MPa.
[5] The battery packaging material as recited in any one of the above-described Items [1] to [4],
   wherein a lubricant of 1 mg/m² to 10 mg/m² exists on a surface of the heat fusible resin layer.

### Effects of the Invention

Since the total thickness of the laminate of the battery packaging material as recited in the above-described Item [1] is 60 µm to 220 µm, good formability can be obtained while securing the strength required for a case. Further, since the product of the stress value and the thickness of the heat fusible resin layer at the time of 10% stretching is 1,200 Pa·m or more, it is possible to suppress the occurrence of curling while obtaining good formability.

In the battery packaging material as recited in the above-described Item [2], since the stress value of the heat fusible resin layer at the time of 10% stretching is 14 MPa to 35 MPa, it has satisfactory proof stress against deformation, and the effect (stress) of elongation and contraction to deformation is suppressed. Therefore, the occurrence of curling can be suppressed more assuredly.

In the battery packaging material as recited in the above-described Item [3], the thickness of the heat fusible resin layer is 20 µm to 120 µm, and the center position of the laminate having the total thickness of 60 µm to 220 µm in the thickness direction is located in the vicinity of the barrier layer. Therefore, it becomes easy to cancel the stress of the outer layer including the substrate layer, which makes it possible to more assuredly suppress the degree of curling.

In the battery packaging material as recited in the above-described Item [4], the breaking strength of the outer layer is 20 MPa to 160 MPa. Therefore, it is possible to maintain the good formability of the laminate and suppress the occurrence of curling.

In the battery packaging material as recited in the above-described Item [5], the lubricant of 1 mg/m² to 10 mg/m² is present on the surface of the heat fusible resin layer. For this reason, stress does not concentrate on the resin of the deforming portion at the time of molding, and therefore, the stress applied to the resin of the end portion is also relaxed. Consequently, the occurrence of curling is suppressed.

### BRIEF DESCRIPTION OF THE DRAWINGS

Some embodiments of the present disclosure are shown by way of example, and not limitation, in the accompany figures.
FIG. 1 is a cross-sectional view showing an example of a battery packaging material according to the present invention.
FIG. 2A is a cross-sectional view showing another example of a battery packaging material according to the present invention.
FIG. 2B is a cross-sectional view showing still another example of a battery packaging material according to the present invention.
FIG. 2C is a cross-sectional view showing still yet another example of a battery packaging material according to the present invention.
FIG. 3 is a cross-sectional view of a battery case formed of the battery packaging material shown in FIG. 1.
FIG. 4 is a plan view of a test piece used for a tensile test.
FIG. 5 is an explanatory diagram showing a curling evaluation method.
FIG. 6 is a supplementary explanatory diagram showing curling evaluation criteria.

### DESCRIPTION OF THE EMBODIMENTS

In the following paragraphs, some embodiments in the present disclosure will be described by way of example and not limitation. It should be understood based on this disclosure that various other modifications can be made by those in the art based on these illustrated embodiments.

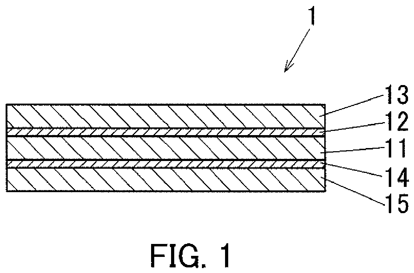

FIG. 1 to FIG. 2C show an example and its modifications of a battery packaging material according to the present invention.

In the following description, a layer denoted by the same reference symbol represents the same or equivalent layer, and therefore, the duplicate description will be omitted.

### [Battery Packaging Material]

The battery packaging material according to the present invention is formed of a laminate including, as basic configuration elements, a substrate layer including an outer layer, a barrier layer as an intermediate layer formed of a metal foil, and a heat fusible resin layer as an innermost layer. By defining the total thickness of the laminate and defining the characteristics of the heat fusible resin layer, the occurrence of curling at the time of molding is suppressed.

The battery packaging material 1 shown in FIG. 1 is configured by a laminate. The laminate includes a barrier layer 11, a substrate layer 13 bonded to one side of the barrier layer 11 via a first adhesive layer 12, and a heat fusible resin layer 15 bonded to the other side of the barrier layer 11 via a second adhesive layer 14.

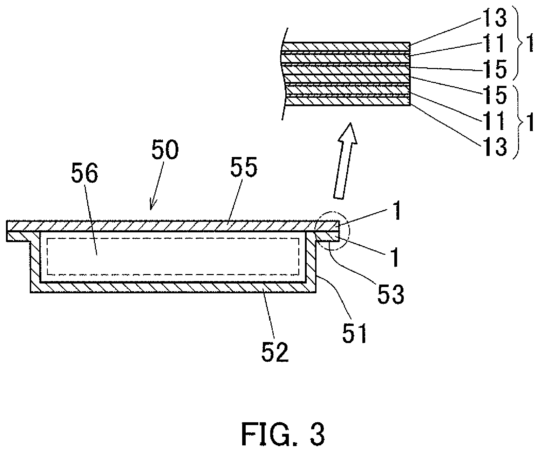

As shown in FIG. 3, the battery packaging material 1 is processed into a main body 51 having a recess 52 and a flat lid 55. The main body 51 and the lid 55 are arranged so that the heat fusible resin layers 15 thereof face with each other. A battery main body 56 is accommodated in the recess 52. In this state, a flange portion 53 around the recess 52 and the lid 55 are heat-sealed. With this, a battery case 50 is produced. In the battery case 50, the substrate layer 13 is arranged on the outer side of the battery case 50, and the heat fusible resin layer 15 is arranged on the inner side of the battery case 50.

In this specification, when describing the position of each layer constituting the battery packaging material with a direction, the direction on the substrate side is referred to as an outer side, and the direction on the heat fusible resin layer is referred to as an inner side, conforming with the inner and outer directions of the case.

In the battery packaging material 1, the barrier layer 11 is referred to as an intermediate layer, the layer present outer than the intermediate layer, except for the adhesive layer for bonding, is referred to as an outer layer, and the layer present inner than the intermediate layer is referred to as an inner layer.

Curling in a battery packaging material denotes a phenomenon in which the battery packaging material warpage when tensile force is applied to the battery packaging material and the applied tensile force is removed. The warpage direction is defined as positive (+) when the end portion of the battery packaging material is bent toward the outer layer (substrate layer 13) side and is defined as negative (-) when the end portion of the battery packaging material is bent toward the inner layer (heat fusible resin layer) side. Therefore, when molding the main body 51 of the battery case 50, the case in which the leading end of the flange portion 53 curves toward the bottom side of the recess 52 is defined as a positive warpage, and the case in which the leading end curves toward the opening portion side is defined as a negative warpage.

Hereinafter, the features of the battery packaging material 1 and each layer constituting the battery packaging materials 1 will be described in detail below.

### (Total Thickness of Laminate)

The total thickness of the laminate, i.e., the total thickness of the battery packaging material 1, is set to 60 µm to 220 µm. In the battery packaging material 1, which is a battery case material, a higher formability is required to form a deeper recess in order to secure an accommodation space for a battery main body. By defining the total thickness of the battery packaging material 1 within the above-described range, good formability can be obtained while maintaining strength required for a case. The particularly preferred total thickness is 90 µm to 180 µm.

### (Barrier Layer)

The barrier layer 11 has a role of imparting a gas barrier property to the battery packaging material 1 to prevent the intrusion of oxygen and/or moisture. The barrier layer 11 is not particularly limited as long as it is a metal foil. Examples of the barrier layer 11 include an aluminum foil, a SUS foil (stainless-steel foil), a copper foil, a nickel foil, a titanium foil, and a clad foil, and an aluminum foil can be suitably used. In particular, an Al-Fe-based alloy foil containing a Fe of 0.7 mass% to 1.7 mass% has excellent strength and spreadability and is highly effective in suppressing the occurrence of curling while obtaining good formability. The thickness of the barrier layer 11 is preferably 10 µm to 120 µm. When the thickness is 10 µm or more, it is possible to prevent pinholes from being generated at the time of rolling when producing a metal foil, and when the thickness is 120 µm or less, it is possible to reduce stress at the time of molding, such as, e.g., stretch forming and drawing, which in turn can improve the formability. The particularly preferred thickness of the barrier layer 11 is 30 µm to 90 µm.

Further, in the barrier layer 11, at least the surface of the metal foil on the side of the heat fusible resin layer 15 is preferably subjected to a surface treatment, such as, a chemical conversion treatment. By being subjected to such a surface treatment, it is possible to sufficiently prevent the metal foil surface from being corroded by the contents (such as, e.g., the electrolytes of the battery).

### (Heat Fusible Resin Layer)

The heat fusible resin layer 15 imparts excellent chemical resistance against an electrolyte having high corrosiveness and also has a role of imparting a heat-sealing property to the battery packaging material 1.

In the heat fusible resin layer 15, it is necessary that the product of the stress value and the thickness at the time of 10% stretching is 1,200 Pa·m or more. The product indicates the degree of hardness, rigidity, and resistance to deformation of the heat fusible resin layer 15. When the product is smaller, it is soft and the formality is better, but the spring-back is larger when the tensile force applied to the battery packaging material is released, and therefore, the warpage becomes larger. Therefore, the product is defined to be 1,200 Pa·m or more. On the other hand, when the product becomes larger, the spring back becomes smaller, resulting in a reduced warpage, and therefore, the formability deteriorates. Therefore, in order to suppress the occurrence of curling while obtaining good formability, it is preferable that the product be within the range of 1,300 Pa·m to 3,500 Pa·m.

Further, the stress value of the heat fusible resin layer 15 at the time of 10% stretching is preferably 14 MPa to 35 MPa. The curling of the flange portion 53 (see FIG. 3) at the time of molding the recess 52 occurs by the effects of expansion and contraction of the outer layer including the substrate layer 13 and the barrier layer 11. When the stress value of the heat fusible resin layer 15 is equal to or greater than 14 MPa, it has enough proof stress against the deformation around the flange portion 53 after molding. When it is equal to or less than 35 MPa, the effect (stress) of expansion and contraction to the deformation around the flange portion 53 after molding is suppressed. Therefore, when the stress value of the heat fusible resin layer 15 is 14 MPa to 35 MPa, the occurrence of curling can be suppressed more assuredly. In other words, when the stress value is less than 14 MPa, the stress value of the heat fusible resin layer 15 is too small, and therefore, the effect of the stress due to expansion and contraction of the outer layer including the substrate layer 13 is generated, which easily cause curling on the side of the substrate layer 13. On the other hand, when the stress value exceeds 35 MPa, the effect of the stress to the elongation of the heat fusible resin layer 15 is generated, which easily causes curling on the side of the heat fusible resin layer 15. Note that the more preferred stress value is within the range of 16 MPa to 32 MPa.

The thickness of the heat fusible resin layer 15 is preferably 20 µm to 120 µm. When the thickness of the heat fusible resin layer 15 is within the above-described range, the center position of the laminate having a total thickness of 60 µm to 220 µm in the thickness direction is located in the vicinity of the barrier layer 11. Therefore, it is easy to cancel out the stresses of the outer layer including the substrate layer 13, which can suppress the degree of occurrence of curling more assuredly. The particularly preferred thickness of the heat fusible resin layer 15 is 25 µm to 100 µm, even more preferably 25 µm to 80 µm.

The resin constituting the heat fusible resin layer 15 is preferably a propylene-based resin and is preferably a non-stretched film made of cast polypropylene (CPP) or inflation polypropylene (IPP). Examples of the propylene-based polymer include a propylene-ethylene copolymer containing ethylene and propylene as a copolymerization component, in addition to a homopolymer (hPP) of propylene. The propylene-ethylene copolymer may be either a random copolymer (rPP) or a block-copolymer (bPP). The heat fusible resin layer 15 may be either a single-layer film or a multilayer film. The multilayer film may be produced by coextrusion or the like. Among the various propylene-based resin films described above, a three-layer coextruded CPP film can be recommended in which hPP or bPP is served as an intermediate layer and an rPP layer is arranged on both outer sides of the intermediate layer, in view of the excellent heat-sealing property, delamination resistance, and insulating property.

Further, it is preferable that a lubricant be present on the surface of the heat fusible resin layer 15. When a lubricant is present on the surface of the heat fusible resin layer 15, stress does not concentrate on the resin of the deforming portion at the time of molding. Therefore, the stress applied to the resin of the end portion is also relaxed, and consequently, the occurrence of curling is suppressed. The abundance of the lubricant is preferably within the range of 1 mg/m² to 10 mg/m², more preferably 1 mg/m² to 5 mg/m².

Examples of the method of causing a lubricant to be present on the surface of the heat fusible resin layer 15 include the following methods (1) and (2).
Method (1): a lubricant is applied to the surface of the heat fusible resin layer
Method (2): a lubricant is made to be impregnated in the material resin constituting the heat fusible resin layer 15 to form a laminate and then aged to deposit the lubricant on the surface of the heat fusible resin layer 15

In producing the battery packaging material 1, in general, layers are laminated, then wound on a roll shaft, and aged to stabilize the adhesive layers. By impregnating the lubricant in the heat fusible resin layer 15, it is possible to deposit the lubricant on the surface by aging. Further, it is preferable to set the lubricant content in the heat fusible resin layer 15 to 500 ppm to 3,000 ppm, more preferably 700 ppm to 3,000 ppm.

In the battery packaging material according to the present invention, the preferred lubricant is as follows. Note that the lubricant includes a substance called "surfactant."

Examples of saturated fatty acid amide include lauramide, palmitamide, stearamide, behenamide, and hydroxystearic acid amide.

Examples of unsaturated fatty acid amide include oleamide and erucamide.

Examples of substituted amide include N-oleyl palmitamide, N-stearyl stearamide, N-stearyl oleamide, N-oleyl stearamide, and N-stearyl erucamide.

Examples of methylolamide include methylolstearic acid amide.

Examples of saturated fatty acid bisamides include methylenebisstearic acid amide, ethylenebislauric acid amide, ethylenebisphosphoric acid amide, ethylenebisstearic acid amide, ethylenebishydroxystearic acid amide, ethylenebisbehenic acid amide, hexamethylenebisstearic acid amide, hexamethylenebisbehenic acid amide, hexamethylenehydroxystearic acid amide, N,N'-distearyladipic acid amide, and N,N'-distearylsebacic acid amide.

Examples of unsaturated fatty acid bisamides include ethylene bis-oleamide, ethylene bis-erucamide, hexamethylene bis-oleamide, N,N'-dioleyl-adipic acid amide, and N,N'-dioleyl- sebacamide.

An example of fatty acid ester amides includes stearamide ethyl stearate.

Examples of aromatic bisamide include m-xylylene bisstearamide, m-xylylene bishydroxystearamide, and N,N'-cystearyl isophthalic acid amide.

Examples of the surfactant include anionic surfactant, cationic surfactant, and nonionic surfactant.

The heat fusible resin layer 15 is an inner layer located inner than the barrier layer 11 and is an innermost layer of the laminate.

### (Outer layer)

The outer layer includes at least the substrate layer 13. The outer layer may be a single layer or a multilayer. In a case where the outer layer is formed of a multilayer, there are a case in which the substrate layer 13 itself is a multilayer and a case in which another layer for adding a function to the battery packaging material 1 is laminated on the outer side of the substrate layer 13. The outer layer shown in FIG. 1 is configured by only the substrate layer 13 that is a single layer.

As the substrate layer 13, a heat-resistant resin film that does not melt at the heat-sealing temperature at the time of heat-sealing the battery packaging material 1 is used. As the heat-resistant resin, a heat-resistant resin having a melting point higher than the melting point of the resin constituting the heat fusible resin layer 15 by 10°C or more, preferably 20°C or more, is used.

As the resin satisfying this condition, a polyamide film and a polyester film, such as, e.g., a nylon film, and the stretched film thereof are preferably used. Among them, as the substrate layer 13, a biaxially stretched polyamide film, such as, e.g., a biaxially stretched nylon film, a biaxially stretched polybutylene terephthalate (PBT) film, a biaxially stretched polyethylene terephthalate (PET) film, or a biaxially stretched polyethylene naphthalate (PEN) film is particularly preferably used. The example of the nylon film includes, but not particularly limited thereto, a 6 nylon film, a 6,6 nylon film, and an MXD nylon film.

The substrate layer 13 may be formed of a single layer or may be formed of, for example, a multilayer (e.g., a multilayer made of PET film/nylon film) made of polyester film/polyamide film.

The thickness of the substrate layer 13 is preferably 9 µm to 50 µm. With this thickness, satisfactory strength required for a packaging material can be secured, and stress at the time of molding, such as, e.g., stretch forming and drawing, can be reduced, thereby improving formability. The more preferable thickness of the substrate layer 13 is 9 µm to 30 µm. In a case where the substrate layer 13 is a multilayer, the total thickness is set to the above-described thickness. The thickness of the adhesive agent for bonding a plurality of layers is also included in the above-described thickness.

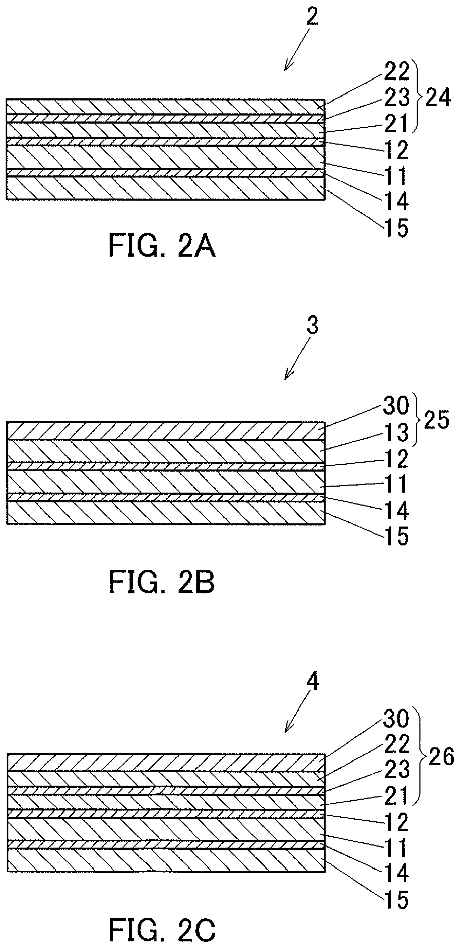

As the layer constituting the outer layer, in addition to the above-described substrate layer 13, a protective layer to be laminated on the outer side of the substrate layer 13 and an adhesive layer for bonding a layer constituting an outer layer may be exemplified. The outer layer 24 of the battery packaging material 2 shown in FIG. 2 A is a substrate layer formed of a multilayer in which a first substrate layer 21 and a second substrate layer 22 are bonded together by an adhesive layer 23. In the outer layer 25 of the battery packaging material 3 shown in FIG. 2B, a substrate protective layer 30 is laminated on the outer side of the substrate layer 13. In the outer layer 26 of the battery packaging material 4 shown in FIG. 2C, a substrate protective layer 30 is laminated on the outer side of a substrate layer formed of a multilayer in which a first substrate layer 21 and a second substrate layer 22 are bonded by an adhesive layer 23.

The substrate protective layer 30 is a layer for imparting good slipperiness to the surface of the battery packaging material to improve the formability and for imparting excellent chemical resistance, solvent resistance, and abrasion resistance.

The substrate protective layer 30 is made of a resin composition including resin components and solid fine particles, and the preferable materials are as follows.

As the resin component, it is preferable to use at least one kind of resin out of an acryl-based resin, an epoxy-based resin, a urethane-based resin, a polyolefin-based resin, a fluorine-based resin, and a phenoxy resin. Since these resins have high chemical resistance and solvent resistance, solid fine particles are less likely to fall off due to degradation, etc., of the resin.

Further, the resin components may be a main agent resin including at least one kind of resin described above and a curing agent for curing the main agent resin. The curing agent is not particularly limited and may be appropriately selected depending on the main agent. For example, in a case where the main agent resin is a mixture of a urethane-based resin and a phenoxy-based resin, an isocyanate compound is preferably used. As the isocyanate compound, various polyfunctional isocyanate compounds of aliphatic, alicyclic, and aromatic systems can be recommended. As the aliphatic polyfunctional isocyanate compound, hexamethylene diisocyanate (HDI) can be exemplified. As the alicyclic polyfunctional isocyanate compound, isophorone diisocyanate (IPDI) can be exemplified. As the aromatic polyfunctional isocyanate compound, tolylene diisocyanate (TDI), and diphenylmethane diisocyanate (MDI) can be exemplified. Further,a modified product of these polyfunctional isocyanate compounds may be used, and multifunctional isocyanate modified products by multimerization reaction, such as, e.g., isocyanurate, carbodiimidization, and polymerization can be exemplified.

The curing agent is preferably contained by 5 parts by mass to 30 parts by mass to 100 parts by mass of the main agent. When it is less than 5 parts by mass, adhesive property and solvent resistance to the substrate layer 13 may be reduced. When it exceeds 30 parts by mass, the substrate protective layer 30 may become hard, which may lower formability. The particularly preferred amount of the curing agent is 10 parts to 20 parts by mass to 100 parts by mass of the main agent.

Since the substrate protective layer 30 has a smaller shrinkage rate than that of the film constituting the substrate layer 13, it is possible to reduce the stress caused by the expansion and contraction of the outer layer to the substrate layer 13. In particular, when nylon is used as the substrate layer 13, nylon has a property of easily shrinking to moisture, but the substrate protective layer 30 blocks moisture in the atmosphere, and therefore, it is not likely to shrink, thereby suppressing the stress to the outer layer.

Further, it is preferable to use urethane-based resin and polyester urethane-based resin as a main agent.

As the solid fine particles, either inorganic fine particles or organic fine particles may be used, and the mixture thereof may also be used. Examples of inorganic fine particles include silica, alumina, calcium oxide, calcium carbonate, calcium sulfate, calcium silicate, and carbon black. As the organic fine particles, fine particles of an acrylic ester-based compound, a polystyrene-based compound, an epoxy-based resin, a polyamide-based compound, or a crosslinking thereof, may be used. One kind of solid fine particles may be used, or two or more kinds thereof may be used in combination.

These solid fine particles having an average particle diameter of 1 µm to 10 µm, more preferably 2 µm to 5 µm, are preferably used. When solid fine particles having a small particle diameter of less than 1 µm is used, it is difficult to obtain desired properties because they are buried in a coating liquid. On the other hand, when solid fine particles particle having a large particle diameter of more than 10 µm are used, the particle diameter exceeds the coating thickness, causing easily falling from the substrate protective layer.

Further, the content rate of the solid fine particles in the resin composition is preferably within the range of 0.1 mass% to 60 mass%, more preferably within the range of 5 mass% to 55 mass%.

The thickness of the substrate protective layer 30 after curing is preferably 1 µm to 10 µm. A layer thinner than the lower limit is less effective in improving slipperiness, and a layer thicker than the upper limit increases the cost. The particularly preferred thickness is 2 µm to 5 µm.

Note that the present invention is not intended to exclude components other than the resin components and solid fine particles described above as the components of the resin composition constituting the substrate protective layer 30, adding other components is allowed as long as it does not impair the characteristics of the substrate protective layer 30. For example, a lubricant may be added.

The breaking strength of the outer layer is preferably 20 MPa to 160 MPa. When the breaking strength of the outer layer is within this range, good formability of the laminate can be maintained, and the occurrence of curling can be suppressed. The particularly preferred breaking strength is 40 MPa to 150 MPa. Note that the breaking strength denotes a multilayer strength when the outer layer is formed of a multilayer including a substrate protective layer and the like. Further, in a case where the outer layer is configured by only the substrate layer 13, and the substrate layer is a multilayer film in which a plurality of films is bonded by an adhesive agent, it is the breaking strength of the multilayer film including the adhesive agent.

### (First Adhesive Layer)

The first adhesive layer 12 is exemplified by, but not particularly limited, an adhesive layer formed of a two-part curing type adhesive agent. Examples of the two-part curing type adhesive agent include a two-part curing type adhesive agent composed of a first liquid (main agent) composed of one or two kinds of polyols selected from the group consisting of a polyurethane-based polyol, a polyester-based polyol, a polyether-based polyol, and a polyester urethane-based polyol and a second liquid (curing agent) composed of isocyanate. Among them, it is preferable to use a two-part curing type adhesive agent composed of a first liquid composed of one or two or more kinds of polyols selected from the group consisting of a polyester-based polyol and a polyester urethane-based polyol and a second liquid (curing agent) composed of isocyanate. The preferred thickness of the first adhesive layer 12 is 2 µm to 5 µm.

Further, even in a case where the outer layer is formed of a multilayer (including a case where the substrate layer is formed of a multilayer), the above-described adhesive agent can be recommended.

### (Second Adhesive Layer)

The second adhesive layer 14 is not particularly limited. As the second adhesive layer 14, for example, an adhesive agent containing at least one kind of a polyurethane-based resin, an acryl-based resin, an epoxy-based resin, a polyolefin-based resin, an elastomer-based resin, a fluorine-based resin, and an acid-modified polypropylene resin can be recommended. Among them, an adhesive agent formed from a polyurethane composite resin having an acid-modified polyolefin as a main agent is preferable. The preferred thickness of the second adhesive layer 14 is 2 µm to 5 µm.

The first adhesive layer 12 and the second adhesive layer 14 are not essential layers. The substrate layer 13 may be directly bonded to the barrier layer 11, or the heat fusible resin layer 15 may be directly bonded to the barrier layer 11.

### Examples

As Examples 1 to 16 and Comparative Examples 1 to 4, battery packaging materials 1, 2, and 3 in the laminated form shown in FIG. 1, FIG. 2A, or FIG. 2B were prepared.

The battery packaging materials 1 of Examples 1 to 12, 15 and Comparative Examples 1 to 4 each were in a laminated form shown FIG. 1. From the outer side, the substrate layer (outer layer) 13, the first adhesive layer 12, the barrier layer 11, the second adhesive layer 14, and the heat fusible resin layer 15 were laminated in this order.

The battery packaging material 3 of Example 13 is in a laminated form shown in FIG. 2B. From the outer side, the substrate protective layer 30, the substrate layer 13, the first adhesive layer 12, the barrier layer 11, the second adhesive layer 14, and the heat fusible resin layer 15 were laminated in this order. The outer layer 25 in the battery packaging material 3 is composed of two layers of the substrate protective layer 30 and the substrate layer 13.

The battery packaging materials 2 of Examples 14 and 16 are in a laminated form shown in FIG. 2A. The second substrate layer 22, the adhesive layer 23, the first substrate layer 21, the first adhesive layer 12, the barrier layer 11, the second adhesive layer 14, and the heat fusible resin layer 15 were laminated in this order from the outside. The outer layer 24 in the battery packaging material 2 was composed of three layers of the second substrate layer 22, the adhesive layer 23, and the first substrate layer 21.

The materials commonly used for the battery packaging materials of the above-described Examples were as follows.

### (Common Material)

As the barrier layer 11, an aluminum foil made of a A8021-O defined by JIS H4160 and having a thickness of 30 µm, 35 µm, 40 µm, 60 µm, and 80 µm was used. On both surfaces of the aluminum foil, a chemical conversion treatment solution composed of phosphoric acid, polyacrylic acid (acryl-based resin), chromium (III) salt compound, water, and alcohol was applied, followed by drying at 180°C to form a chemical conversion coating film. The chromium adhesion amount of this chemical conversion coating film was 3 mg/m² per one side.

As the first adhesive layer 12, a two-part curing type urethane-based adhesive agent was used.

As the second adhesive layer 14, a two-part curing type maleic acid-modified propylene adhesive agent was used.

### (Example 1)

As the barrier layer 11, an aluminum foil having a thickness of 40 µm was used. As the substrate layer 13, a biaxially stretched 6 nylon films having a thickness of 15 µm was used. As the heat fusible resin layer 15, a three-layer coextruded non-stretched polypropylene (CPP) film having a thickness of 80 µm was used. The three-layer coextruded non-stretched polypropylene (CPP) film was formed of an intermediate layer and outer layers arranged on both sides of the intermediate layer. The intermediate layer had a thickness of 56 µm and was made of an propylene-ethylene block copolymer (bPP). Each of the outer layers had a thickness of 12 µm and was made of an propylene-ethylene random copolymer (rPP). Further, the heat fusible resin layer 15 contained erucamide of 1,200 ppm.

Then, the first adhesive layer 12 having a thickness of 4 µm was formed on one side of the barrier layer 11, and the substrate layer 13 was dry-laminated to the barrier layer 11 via the first adhesive layer 12. Next, the second adhesive layer 14 having a thickness of 2 µm was formed on the other side of the barrier layer 11, and the heat fusible resin layer 15 was superimposed on the barrier layer 11 via the second adhesive layer 14. Then, they were sandwiched between a rubber nip roll and a laminate roll heated to 100°C and crimped to produce a laminate by dry lamination, and wound on a roll shaft.

The laminate wound on the roll shaft was aged at 40°C for 10 days to obtain a battery packaging material 1.

### (Example 2)

A battery packaging material 1 was prepared in the same manner as in Example 1 except that a three-layer coextruded non-stretched polypropylene (CPP) film having a thickness of 80 µm was used as the the heat fusible resin layer 15. The three-layer coextruded non-stretched polypropylene (CPP) film was formed of an intermediate layer and outer layers arranged on both sides of the intermediate layer. The intermediate layer had a thickness of 64 µm and was made of a homopropylene polymer (hPP). Each of the outer layers had a thickness of 8 µm and was made of rPP.

### (Example 3)

A battery packaging material 1 was prepared in the same manner as in Example 1 except that a three-layer coextruded non-stretched polypropylene (CPP) film having a thickness of 80 µm was used as the heat fusible resin layer 15. The heat fusible resin layer 15 was formed of an intermediate layer and outer layers arranged on both sides of the intermediate layer. The intermediate layer had a thickness of 72 µm and was made of hPP. Each of the outer layers had a thickness of 4 µm and was made of rPP.

### (Example 4)

A battery packaging material 1 was prepared in the same manner as in Example 1 except that a three-layer coextruded non-stretched polypropylene (CPP) film having a thickness of 120 µm was used as the heat fusible resin layer 15. The three-layer coextruded non-stretched polypropylene (CPP) film was formed of an intermediate layer and outer layers arranged on both sides of the intermediate layer. The intermediate layer had a thickness of 96 µm and was made of hpp. Each of the outer layers had a thickness of 12 µm and was made of rPP.

### (Example 5)

A battery packaging material 1 was prepared in the same manner as in Example 1 except that a three-layer coextruded non-stretched polypropylene (CPP) film having a thickness of 120 µm was used as the heat fusible resin layer 15. The three-layer coextruded non-stretched polypropylene (CPP) film was formed of an intermediate layer and outer layers arranged on both sides of the intermediate layer. The intermediate layer had a thickness of 84 µm and was made of bPP. Each of the outer layers had a thickness of 18 µm and was made of rPP.

### (Example 6)

A battery packaging material 1 was prepared in the same manner as in Example 1 except for the following. As the barrier layer 11, an aluminum foil having a thickness of 35 µm was used. As the heat fusible resin layer 15, a three-layer coextruded non-stretched polypropylene (CPP) film having a thickness of 40 µm was used. The three-layer coextruded non-stretched polypropylene (CPP) film was formed of an intermediate layer and outer layers arranged on both side of the intermediate layer. The intermediate layer had a thickness of 36 µm and was made of bPP. Each of the outer layers had a thickness of 2 µm and was made of rPP. The concentration of erucamide was set to 1,500 ppm.

### (Example 7)

A battery packaging material 1 was prepared in the same manner as in Example 1 except for the following. As the barrier layer 11, an aluminum foil having a thickness of 30 µm was used. As the substrate layer 13, a biaxially stretched 6 nylon film having a thickness of 9 µm was used. The thickness of the first adhesive layer 12 was set to 2 µm. As the heat fusible resin layer 15, a single-layer film was used. The single-layer film had a thickness of 35 µm and was made of hPP. The concentration of erucamide was set to 1,500 ppm.

### (Example 8)

A battery packaging material 1 was prepared in the same manner as in Example 1 except that a biaxially stretched 6 nylon film having a thickness of 25 µm was used as the substrate layer 13.

### (Example 9)

A battery packaging material 1 was prepared in the same manner as in Example 1 except for the following. As the heat fusible resin layer 15, a three-layer coextruded non-stretched polypropylene (CPP) film having a thickness of 80 µm was used. The three-layer coextruded non-stretched polypropylene (CPP) film was formed of an intermediate layer and outer layers arranged on both sides of the intermediate layer. The intermediate layer had a thickness of 52 µm and was made of bPP. Each of the outer layers had a thickness of 14 µm and was made of rPP. As the substrate layer 13, a biaxially stretched 6 nylon film having a thickness of 25 µm was used.

### (Example 10)

A battery packaging material 1 was prepared in the same manner as in Example 1 except for the following. As the barrier layer 11, an aluminum foil having a thickness of 35 µm was used. As the heat fusible resin layer 15, a single-layer film was used. The single-layer had a thickness of 30 µm and was made of hPP.

### (Example 11)

A battery packaging material 1 was prepared in the same manner as in Example 1 except for the following. As the substrate layer 13, a biaxially stretched 6 nylon film having a thickness of 25 µm was used. The concentration of erucamide of the heat fusible resin layer 15 was set to 500 ppm.

### (Example 12)

A battery packaging material 1 was prepared in the same manner as in Example 1 except for the following. As the substrate layer 13, a biaxially stretched 6 nylon film having a thickness of 25 µm was used. The concentration of erucamide of the heat fusible resin layer 15 was set to 3,500 ppm.

### (Example 13)

A resin composition for forming the substrate protective layer 30 was prepared by the method described below. A resin component was prepared in which 10 parts by mass of a curing agent was mixed to 100 parts by mass of a main resin. The main resin was a polyester polyol resin. And the curing agent was a mixture of tolylene diisocyanate (TDI) and hexamethylene diisocyanate (HDI) in a mass ratio of 1:1. Then, silica having an average particle diameter of 2 µm was blended into the resin composition and dispersed uniformly such that the content in the resin composition became 20 mass%.

As the barrier layer 11, an aluminum foil having a thickness of 35 µm was used. As the substrate layer 13, a biaxially stretched 6 nylon film having a thickness of 12 µm was used. As the heat fusible resin layer 15, a three-layer coextruded non-stretched polypropylene (CPP) film was used. The three-layer coextruded non-stretched polypropylene (CPP) film was formed of an intermediate layer and outer layers arranged on both sides of the intermediate layer. The intermediate layer had a thickness of 36 µm and was made of an propylene-ethylene block copolymer (bPP). Each of the outer layers had a thickness of 2 µm and made of rPP. Further, the heat fusible resin layer 15 contained erucamide of 1,200 ppm.

Then, a first adhesive layer 12 having a thickness of 4 µm was formed on one side of the barrier layer 11, and a substrate layer 13 was dry-laminated on the barrier layer 11 via the first adhesive layer 12. Next, a second adhesive layer 14 having a thickness of 2 µm was formed on the other side of the barrier layer 11, and a heat fusible resin layer 15 was superimposed on the barrier layer 11 via the second adhesive layer 14. They were sandwiched and crimped between a rubber nip roll and a laminate roll heated to 100°C and dry-laminated. This resulted in a laminated film composed of three layers (excluding the adhesive layer).

Next, a resin composition for the substrate protective layer 30 was applied to the surface of the substrate layer 13 of the three-layer laminated film and dried. The thickness of the substrate protective layer 30 after drying was 3 µm. As a result, a four-layer film was formed, and the four-layer film was wound around a roll shaft and aged at 40°C for 10 days in the rolled state to obtain a battery packaging material 3.

In Table 1, the substrate protective layer 30 is referred to as "PU Coat."

### (Example 14)

As a barrier layer 11, an aluminum foil having a thickness of 40 µm was used. As the first substrate layer 21, a biaxially stretched 6 nylon film having a thickness of 15 µm was used. As the second substrate layer 22, a biaxially stretched polyethylene terephthalate film having a thickness of 12 µm was used. As the heat fusible resin layer 15, a three-layer co-extruded non-stretched polypropylene (CPP) film having a thickness of 80 µm was used. The three-layer co-extruded non-stretched polypropylene (CPP) film was formed of an intermediate layer and a first outer layer and a second outer layer arranged on both sides of the intermediate layer. The intermediate layer had a thickness of 56 µm and was made of bPP. The first outer layer had a thickness of 6 µm and the second outer layer had a thickness of 18pm and both were made of rPP. Further, the heat fusible resin layer 15 contained erucamide of 800 ppm.

Then, the first adhesive layer 12 having a thickness of 4 µm was formed on one side of the barrier layer 11. The first substrate layer 21 was dry-laminated on the barrier layer 11 via the first adhesive layer 12. Further, an adhesive layer 23 was formed on the first substrate layer 21 with the same adhesive agent as that of the first adhesive layer 12. A second substrate layer 22 was dry-laminated on the first substrate layer 21 via an adhesive layer 23. Next, a second adhesive layer 14 having a thickness of 2 µm was formed on the other side of the barrier layer 11. The first outer layer of the heat fusible resin layer 15 was superimposed on the barrier layer 11 via the second adhesive layer 14. These were sandwiched between a rubber nip roll and a laminate roll heated to 100°C and then dry-laminated to form a laminate and wound on a roll shaft.

The laminate wound on the roll shaft was aged at 40°C for 10 days to obtain a battery packaging material 2.

### (Example 15)

A battery packaging material 1 was prepared in the same manner as in Example 1 except for the following. As the barrier layer 11, an aluminum foil having a thickness of 60 µm was used. As the substrate layer 13, a biaxially stretched 6 nylon film having a thickness of 25 µm was used. The thickness of the second adhesive layer 14 was set to 3 µm. As the heat fusible resin layer 15, a three-layer coextruded non-stretched polypropylene (CPP) film having a thickness of 100 µm was used. The three-layer coextruded non-stretched polypropylene (CPP) film was formed of an intermediate layer and outer layers arranged on both sides of the intermediate layer. The intermediate layer had a thickness of of 70 µm and was made of bPP. Each of the outer layers had a thickness of 15 µm and was made of rPP. The concentration of erucamide of the heat fusible resin layer 15 was set to 2,500 ppm.

### (Example 16)

A battery packaging material 2 was prepared in the same manner as in Example 14 except for the following. As the barrier layer 11, an aluminum foil having a thickness of 80 µm was used. As the first substrate layer 21, a biaxially stretched 6 nylon film having a thickness of 25 µm was used. The thickness of the second adhesive layer 14 was set to 3 µm.

### (Comparative Example 1)

A battery packaging material 1 was prepared in the same manner as in Example 1 except for the following. As the barrier layer 11, an aluminum foil having a thickness of 35 µm was used. As the heat fusible resin layer 15, a three-layer coextruded non-stretched polypropylene (CPP) film having a thickness of 40 µm was used. The three-layer coextruded non-stretched polypropylene (CPP) film was formed of an intermediate layer and outer layers arranged on both sides of the intermediate layer. The intermediate layer had a thickness of 30 µm and was made of bPP. Each of the outer layers had a thickness of 5 µm was and was made of rPP.

### (Comparative Example 2)

A battery packaging material 1 was prepared in the same manner as in Example 1 except for the following. As the heat fusible resin layer 15, a three-layer coextruded non-stretched polypropylene (CPP) film having a thickness of 80 µm was used. The three-layer coextruded non-stretched polypropylene (CPP) film was formed of an intermediate layer and outer layers formed on both sides of the intermediate layer. The intermediate layer had a thickness of 10 µm and was made of bPP. Each of the outer layers had a thickness of 35 µm and was made of rPP.

### (Comparative Example 3)

A battery packaging material 1 was prepared in the same manner as Example 1 except for the following. As the barrier layer 11, an aluminum foil having a thickness of 30 µm was used. As the substrate layer 13, a biaxially stretched 6 nylon film having a thickness of 9 µm was used. The thickness of the first adhesive layer 12 was set to 2 µm. As the heat fusible resin layer 15, a single-layer film was used. The single-layer had a thickness of 35 µm and was made of bPP.

### (Comparative Example 4)

A battery packaging material 1 was prepared in the same manner as in Example 1 except for the following. As the barrier layer 11, an aluminum foil having a thickness of 30 µm was used. As the substrate layer 13, a biaxially stretched polyethylene terephthalate film having a thickness of 6 µm was used. The thickness of the first adhesive layer 12 was set to 2 µm. The thickness of the second adhesive layer 14 was set to 1 µm. As the heat fusible resin layer 15, a three-layer coextruded non-stretched polypropylene (CPP) film having a thickness of 20 µm was used. The three-layer coextruded non-stretched polypropylene (CPP) film was formed of an intermediate layer and outer layers arranged on both sides of the intermediate layer. The intermediate layer had a thickness of 14 µm and was made of bPP. Each of the outer layers had a thickness of 3 µm and was made of rPP.

Table 1(1/2) shows the layer configuration, the thickness, and the lubricant concentration of the heat fusible resin layer according to each Example. Table 1 (2/2) shows the layer configuration and the total thickness of a stacking form in the battery packaging material according to each example.

The following items were tested or measured for the prepared battery packaging material. The results are shown in Table 1(1/2).

### (Lubricant Abundance on Heat Fusible Resin Layer Surface)

A battery packaging material was cut into a test material of 10 cm × 10 cm. The test material was twice-folded into 5 cm × 10 cm with the heat fusible resin layers faced inward, and the two sides of 5 cm were sealed from the heat fusible resin layer via a PET film to produce a bag body. An acetone 1 mL was accommodated in the bag body and left in close contact with the inner surface of the bag body for 3 minutes, and then the liquid containing the acetone and the lubricant was extracted from the bag body.

The extracted liquid was subjected to a gas chromatograph device, and the amount of lubricant contained in the liquid was determined by a calibration curve method from the detected data, and the amount of lubricant present on the surface was calculated.

### (Stress Value At The Time of 10% Stretching)

A single-layer or a multilayer film constituting the heat fusible resin layer of each Example was made to have a thickness defined by each Example, and the test piece was cut out to measure the stress value at the time of 10% stretching in two directions, in the TD direction and in the MD direction. The test piece was prepared to have a length of 50 mm and a width of 15 mm, and two types were prepared so that the TD direction or the MD direction coincided with the longitudinal direction.

Then, a universal-material tester Tensilon RTG-1210 was used, and a tensile test was performed on the test piece in the longitudinal direction until it was broken under the tensile condition of the moving velocity of 100 mm/min to create a SS curve. In the SS curve, the stress value at the time when it was stretched by 5 mm was defined as a stress value at the time of 10% stretching.

### (Product of Stress Value and Thickness At the Time of 10% Stretching)

The product of the stress value and the thickness of the heat fusible resin layer at the time of 10% stretching obtained by the above-described tensile test was calculated.

### (Outer Layer Breaking Strength)

Each Example except for Example 13 was cut out from the film constituting the substrate layer 13 and the film constituting the substrate layer 13 coated with a substrate protective layer 30 into a test piece of a length of 50 mm and a width of 15 mm, respectively. Then, using a strograph (AGS-5kNX) manufactured by Shimadzu Corporation, according to JIS K7127-1999, the breaking strength was measured by performing the tensile test under the tensile condition of the moving velocity of 200 mm/min in the longitudinal direction until the test piece was broken.

### (Curl)

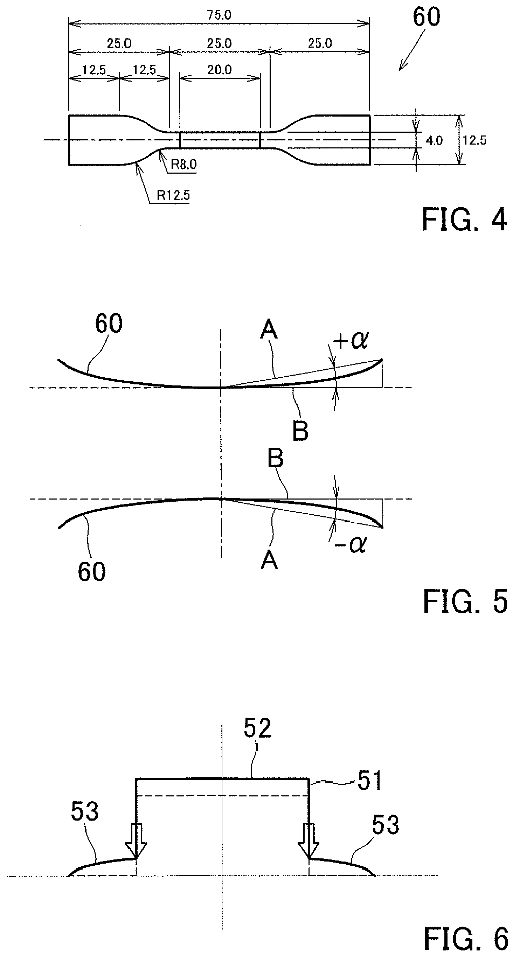

Based on JIS K7127-1999, a test piece 60 of the battery packaging material in the form shown in FIG. 4 was prepared, and the curl direction and the curl size were observed for the deformation after pulling by 3 mm at the moving velocity of 100 mm/min, using a universal-material tester Tensilon RTG-1210.

As shown in FIG. 5, for the narrow angle α formed by the straight line A connecting both ends of the test piece 60 in the longitudinal direction and the center thereof and the horizontal line B of the test piece 60 before the test, when there is a warpage on outer layer side, it is defined as +α, and when there is a warpage on inner layer side, it is defined as -α. Then, the magnitude of the warpage was evaluated by the following criteria.
⊚: -20° ≦ α < 10°
○: -40° ≦ α < -20°, 10° ≦ α ≦ 20°
×: α < -40°, 20° < α

The evaluation criteria differ depending on the direction of the warpage because of the following reasons.

As shown in FIG. 3 and FIG. 6, when forming the recess 52, the warpage of the flange portion 53 warped toward the inner layer (negative side) is improved (the warpage is reduced) by the weight of the main body 51. Therefore, it is possible to accurately evaluate the warpage of the flange portion 53 of the main body 51 of the battery case 50 by adding the warpage direction to the amount of the warpage of the test piece 60.

### (Formability)

The prepared battery packaging material was cut into 100 mm × 150 mm to form a molding material. Then, a deep drawing die including a punch and a blank holder was attached to a servo press machine, and deep drawing was performed to mold the material into a rectangular parallelepiped shape having a vertical length of 33 mm, a horizontal length of 54 mm, and a depth of D. The deep drawing was carried out in a manner such that the top surface of the punch was brought into contact with the heat fusible resin layer of the forming material to project the outer layer outward, and the forming depth D was changed in a unit of 0.5 mm to carry out the molding.

Then, the corners of the molded article were observed to determine the maximal molding depth (mm) at which good molding could be performed without causing any pinholes and cracking, and the formability was evaluated based on the following criteria.
⊚: 7 mm or more
○: 5 mm or more and less than 7 mm
×: less than 5 mm

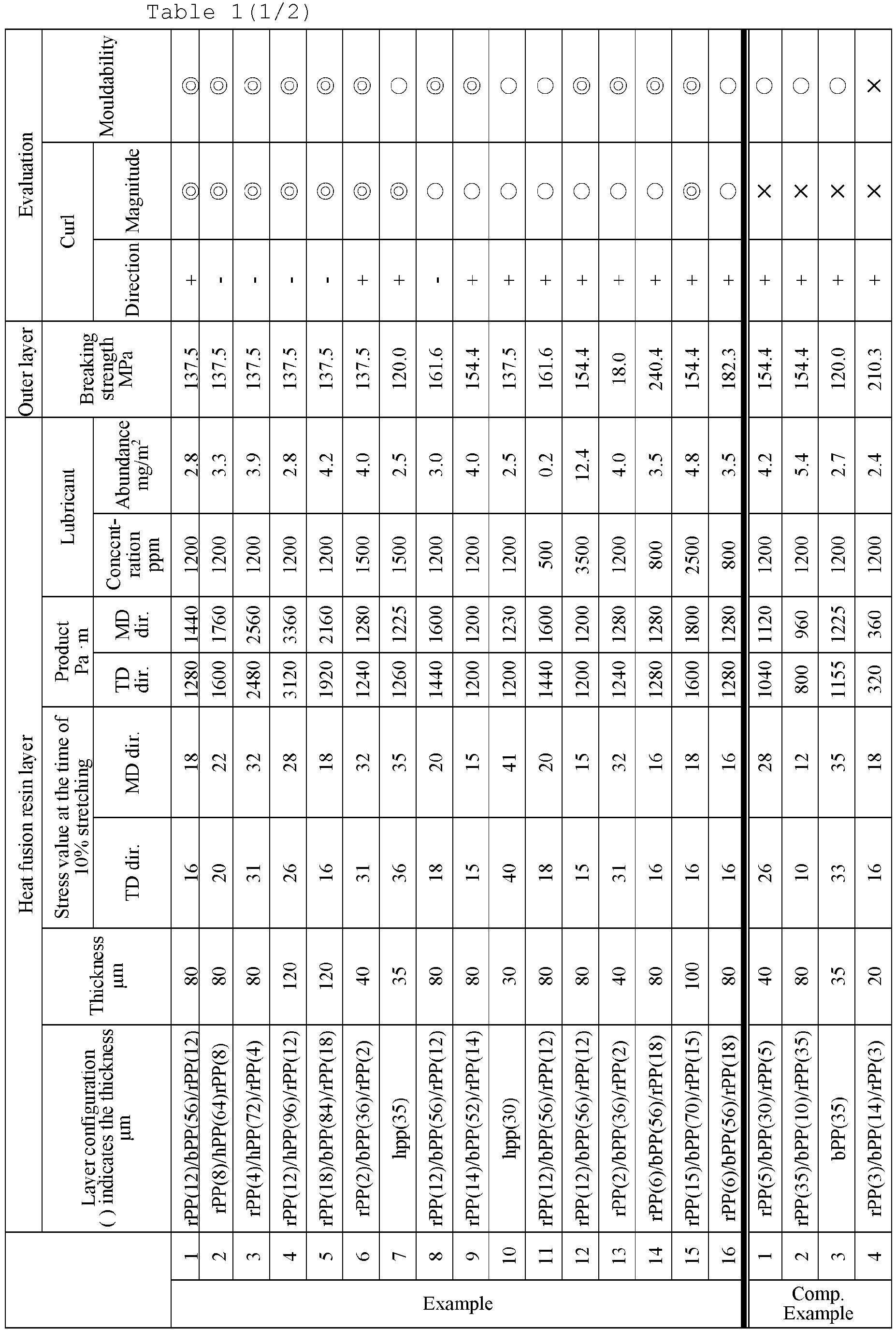

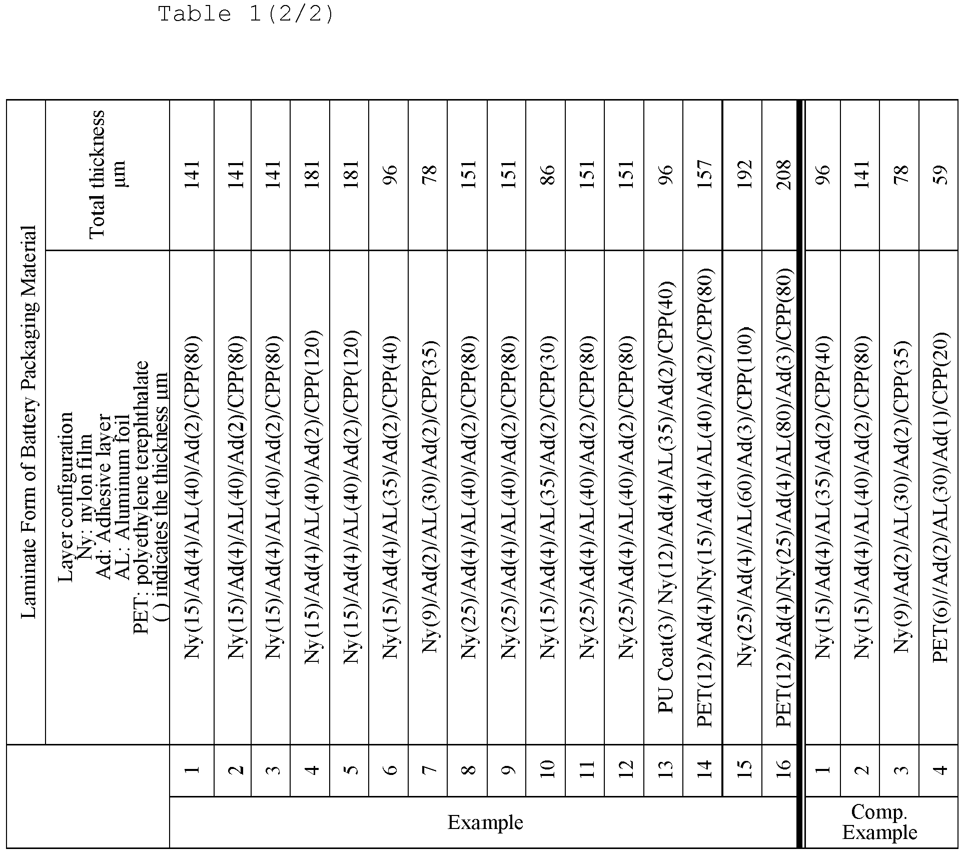

It was confirmed from Table 1 that the battery packaging materials of Examples were suppressed from the occurrence of curling after pulling, and the formability was also good.

It should be understood that the terms and phrases used herein are for the purpose of description and not of limitation, and do not exclude any equivalents of the features shown and described herein, and are intended to allow various modifications within the scope of the present invention claim.

### Industrial Applicability

The battery packaging material according to the present invention can be suitably used as a case material for use in a secondary battery for vehicles, a stationary type secondary battery, a secondary battery for notebook computers, a secondary battery for mobile telephones, and a secondary battery for cameras.

### Description of Symbols

1, 2, 3, 4: battery packaging material
11: barrier layer
12: first adhesive layer
13: substrate layer (outer layer)
14: second adhesive Layer
15: heat fusible resin layer
21: first substrate layer
22: second substrate layer
23: adhesive layer
24, 25, 26: outer layer
30: substrate protective layer

## Claims

1. A battery packaging material comprising:
a laminate,
wherein the laminate includes:
an outer layer including a substrate layer;
a barrier layer as an intermediate layer; and
a heat fusible resin layer as an innermost layer,
wherein a total thickness of the laminate is 60 µm to 220 µm,
wherein the barrier layer is formed of a metal foil, and
wherein a product of a stress value and a thickness of the heat fusible resin layer at a time of 10% stretching is 1,200 Pa·m or more.

2. The battery packaging material as recited in claim 1,
wherein the stress value of the heat fusible resin layer at the time of 10% stretching is 14 MPa to 35 MPa.

3. The battery packaging material as recited in claim 1 or 2,
wherein a thickness of the heat fusible resin layer is 20 µm to 120 µm.

4. The battery packaging material as recited in any one of claim 1 to 3,
wherein breaking strength of the outer layer is 20 MPa to 160 MPa.

5. The battery packaging material as recited in any one of claim 1 to 4,
wherein a lubricant of 1 mg/m² to 10 mg/m² exists on a surface of the heat fusible resin layer.
